(19) Europäisches Patentamt / European Patent Office / Office européen des brevets

(11) **EP 4 290 321 B1**

(12) **EUROPEAN PATENT SPECIFICATION**

(45) Date of publication and mention
of the grant of the patent:
**25.03.2026 Bulletin 2026/13**

(21) Application number: **23742176.3**

(22) Date of filing: **29.03.2023**

(51) International Patent Classification (IPC):
**G05B 19/418** *(2006.01)*    **G06F 30/20** *(2020.01)*
**G06F 111/10** *(2020.01)*

(52) Cooperative Patent Classification (CPC):
**G05B 19/41885; G05B 19/4189; G06F 30/20;**
G06F 2111/10; Y02E 60/00; Y02P 90/02

(86) International application number:
**PCT/CN2023/084869**

(87) International publication number:
**WO 2023/202339 (26.10.2023 Gazette 2023/43)**

(54) **VIRTUAL SIMULATION METHODS AND APPARATUSES FOR CONVEYING MECHANISM, ELECTRONIC DEVICE, PLC AND MEDIUM**

VIRTUELLE SIMULATIONSVERFAHREN UND -VORRICHTUNGEN FÜR FÖRDERMECHANISMUS, ELEKTRONISCHE VORRICHTUNG, PLC UND MEDIUM

PROCÉDÉS ET APPAREILS DE SIMULATION VIRTUELLE POUR MÉCANISME DE TRANSPORT, DISPOSITIF ÉLECTRONIQUE, PLC ET SUPPORT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **18.04.2022 CN 202210406606**

(43) Date of publication of application:
**13.12.2023 Bulletin 2023/50**

(73) Proprietor: **Contemporary Amperex Technology (Hong Kong) Limited**
**Central, Central And Western District (HK)**

(72) Inventors:
• **LIU, Chang**
  NNingde, Fujian 352100 (CN)
• **WANG, Xuming**
  NNingde, Fujian 352100 (CN)
• **GUO, Jianfeng**
  NNingde, Fujian 352100 (CN)
• **SHI, Zheng**
  NNingde, Fujian 352100 (CN)

(74) Representative: **Rowlands, Stuart Michael et al**
**Maucher Jenkins**
**Seventh Floor Offices**
**Artillery House**
**11-19 Artillery Row**
**London SW1P 1RT (GB)**

(56) References cited:
WO-A1-2012/031859   CN-A- 102 004 485
CN-A- 107 292 564   CN-A- 108 121 216
CN-A- 110 674 562   CN-A- 110 674 562
CN-A- 111 797 521   CN-A- 112 068 455
CN-A- 113 420 432   CN-A- 115 840 412

**Description**

Technical Field

Embodiments of the present application relate to the field of virtual simulation, and in particular to a virtual simulation method and apparatus for a conveying mechanism, an electronic device, a PLC, and a medium.

Background Art

A conveyor belt is an indispensable conveying mechanism in a cell module production workshop. Currently, steps of a virtual simulation operation for the conveyor belt are as follows: 1. In Tecnomatix, a Conveyor-Control Point is used to establish a stop point (Stop Point) for a stop position of each pallet to stop the pallet. The stop position of each pallet needs to be calculated in sequence according to process files, and added one by one based on speed attributes. 2. A real-time position is obtained through interaction with a PLC by establishing a virtual axis. However, in the above simulation operation, large errors are likely to occur, and the operation is cumbersome.

CN110674562A relates to a simulation method for a circulating conveyor line with a carrier. The simulation method comprises the steps of collecting and arranging the original data of the circulatingconveyor line; laying the manufacturing resources according to layout, and constructing a simulation system; setting the attributes of the manufacturing resource; and formulating a logic mechanism toensure the consistency of the simulation system and a real system. According to the simulation method that a tray bears two different materials at the same time, the loading and unloading behaviors ofthe tray on the circulating type conveying line are matched with the control logic of a control system, and the authenticity of the simulation effect and the accuracy of the simulation result can beguaranteed. When the tray unloads the materials, an automatic device supports to carry, and the argumentation requirement of the automatic and intelligent conveying line construction is met.

CN111797521A discloses a three-dimensional simulation debugging and monitoring method for an automatic production line, and the method comprises the steps: firstly carrying out the simulation modeling of the automatic production line based on OpenGL simulation software, and obtaining a three-dimensional model of the automatic production line; performing three-dimensional simulation debugging on the three-dimensional model of the automatic production line based on the PLC; and finally, acquiring, by the PLC, a real-time signal of actual equipment-level module operation, and feeding back the real-time signal of the operation equipment to the OpenGL simulation software to perform motion correction of the three-dimensional simulation motion module.

Summary of the Invention

In accordance with the present invention, there is provided a virtual simulation method for a conveying mechanism as recited by claim 1, an electronic device as recited by claim 8, and a computer-readable storage medium as recited by claim 9; preferred features are set out in the dependent claims.

The objective of the present disclosure is to provide a virtual simulation method and apparatus for a conveying mechanism, an electronic device, a PLC, and a medium, so that simulation errors can be reduced and a simulation operation can be simplified while virtual simulation is performed on a conveying mechanism.

According to a first aspect, the present application provides a virtual simulation method for a conveying mechanism, including: obtaining a data model of the conveying mechanism; creating a virtual conveying line according to the data model, so that the data model is movable along the virtual conveying line during a simulation process; creating a target logic block, where the target logic block is used to determine an actual distance for which the data model moves each time during the simulation process; and sending the actual distance to a PLC, so that when it is determined that the actual distance is the same as a target distance for which the conveying mechanism should move each time, the PLC controls the data model to stop moving.

In the technical solution of this embodiment of the present application, the actual distance for which the data model of the conveying mechanism moves each time during the simulation process is determined by the created target logic block, so that when it is determined that the actual distance is the same as the target distance for which the conveying mechanism should move each time, the PLC controls the data model to stop moving. In this embodiment, during the virtual simulation for the conveying mechanism, there is no need to establish a Stop Point, which helps to avoid simulation errors caused by establishing the Stop Point. In addition, the virtual axis established for interacting with the PLC for the real-time position is also omitted, thereby simplifying the simulation operation.

According to the invention, the target logic block is used to determine the actual distance for which the data model moves each time during the simulation process, based on the target distance for which the conveying mechanism should move each time and a cumulative movement distance of the data model during the simulation process.

In the technical solution of this embodiment of the present application, the combination of the target distance for which the conveying mechanism should move each time and the cumulative movement distance of the data model of the conveying mechanism helps to accurately obtain the actual distance for which the data model of the conveying mechanism moves each time during the simulation process.

According to the invention, the target logic block is used to calculate the actual distance for which the data model moves each time during the simulation process, according to the following formula:

$$D = Con\_Pos - (RoundDown(Con\_Pos \div (Target\_Pos + 1)) * Target\_Pos)$$

where D is the actual distance, Con_Pos is the cumulative movement distance of the data model, and Target_Pos is the target distance.

In the technical solution of this embodiment of the present application, presetting the formula for calculating the actual distance in the target logic block helps to quickly calculate the actual distance for which the data model of the conveying mechanism moves each time during the simulation process, so as to interact with the PLC in time, thereby improving the accuracy of the PLC controlling the data model of the conveying mechanism to stop moving.

In some embodiments, the cumulative movement distance of the data model is measured based on a distance sensor provided on the data model side of the conveying mechanism.

In the technical solution of this embodiment of the present application, a method for determining the cumulative movement distance is provided. The distance sensor provided on the data model side of the conveying mechanism facilitates the direct and accurate measurement of the cumulative movement distance, thereby improving the accuracy of the actual distance for which the data model of the conveying mechanism moves each time and that is determined based on the cumulative movement distance.

In some embodiments, the target distance is determined based on process information of the conveying mechanism.

In the technical solution of this embodiment of the present application, different conveying mechanisms may correspond to different target distances due to their different process information. Therefore, it is advantageous to obtain a target distance adapted to the conveying mechanism based on the process information of the conveying mechanism.

In some embodiments, the creating a target logic block includes: obtaining a pre-packaged standard logic block for determining the actual distance for which the data model of the conveying mechanism moves each time during the simulation process; and copying operational logic in the standard logic block to the data model to create the target logic block.

In the technical solution of this embodiment of the present application, the target logic block is created based on the pre-packaged standard logic block without starting from scratch, which helps to improve the efficiency and accuracy of creating the target logic block.

In some embodiments, the copying operational logic in the standard logic block to the data model to create the target logic block includes: copying, by using a Copy LB Logic instruction, operational logic in the standard logic block to the data model to create the target logic block.

In the technical solution of this embodiment of the present application, the Copy LB Logic instruction facilitates the accurate and quick completion of the copying of the operational logic, thereby quickly and accurately completing the creation of the target logic block.

In some embodiments, the method further includes: setting an offset between the virtual conveying line and the pallet according to an allowable error range, so that when a distance between the virtual conveying line and the pallet is within the offset, the pallet moves along with the data model of the conveying mechanism.

In the technical solution of this embodiment of the present application, the setting of the allowable error range allows a certain distance error between two data models during the creation of the data models of the conveying mechanism and the pallet in the simulation interface, lowering the strictness of requirements for the distance between the conveying mechanism and the pallet during the creation of the conveying mechanism and the pallet in the simulation interface.

In some embodiments, the creating a virtual conveying line according to the data model includes: determining an actual position of the data model of the conveying mechanism; and creating the virtual conveying line on the data model of the conveying mechanism based on the actual position, and defining an attribute of the virtual conveying line to be a conveyor type.

In the technical solution of this embodiment of the present application, a method for creating the virtual conveying line is provided. Combining with the actual position of the data model of the conveying mechanism helps to accurately determine the creation position of the virtual conveying line, and the definition of the attribute of the conveyor type helps to accurately create the virtual conveying line.

In some embodiments, after the creating a target logic block, the method further includes: determining whether the target logic block is created successfully; and when it is determined that the target logic block is not created successfully, redefining the attribute of the virtual conveying line.

In the technical solution of this embodiment of the present application, since the main reason for which the target logic block is not successfully created may be that the attribute is incorrectly defined or is not defined, when it is determined that the target logic block is not successfully created, the attribute of the virtual conveying line is redefined, which facilitates the successful creation of the target logic block.

In some embodiments, the method further includes: determining a speed of a servo motor based on the process information of the conveying mechanism; and during the simulation process, setting a movement speed of the data model of the conveying mechanism to be the speed of the servo motor.

In the technical solution of this embodiment of the present application, the speed of the servo motor is determined according to the process information of the conveying mechanism, and the movement speed of the data model of the conveying mechanism is set to the speed of the servo motor, which helps to simulate a real movement speed of the conveying mechanism during the simulation process, thereby achieving a desired simulation effect.

According to a second aspect, the present application provides a virtual simulation method for a conveying mechanism, including: sending to an electronic device a target distance for which the conveying mechanism should move each time; receiving an actual distance for which the conveying mechanism moves each time during a simulation process and that is sent by the electronic device, where the actual distance is determined by a target logic block created by the electronic device, and the electronic device creates a virtual conveying line according to an obtained data model of the conveying mechanism, so that the data model is movable along the virtual conveying line during the simulation process; and when it is determined that the actual distance is the same as the target distance, controlling the data model to stop moving.

According to a third aspect, the present application provides a virtual simulation apparatus for a conveying mechanism, including: an obtaining module configured to obtain a data model of the conveying mechanism; a first creation module configured to create a virtual conveying line according to the data model, so that the data model is movable along the virtual conveying line during a simulation process; a second creation module configured to create a target logic block, where the target logic block is used to determine an actual distance for which the data model moves each time during the simulation process; and a distance feedback module configured to send the actual distance to a PLC, so that when it is determined that the actual distance is the same as a target distance for which the conveying mechanism should move each time, the PLC controls the data model to stop moving.

According to a fourth aspect, the present application provides a virtual simulation apparatus for a conveying mechanism, including: a sending module configured to send to an electronic device a target distance for which the conveying mechanism should move each time; a receiving module configured to receive an actual distance for which the conveying mechanism moves each time during a simulation process and that is sent by the electronic device, where the actual distance is determined by a target logic block created by the electronic device, and the electronic device creates a virtual conveying line according to an obtained data model of the conveying mechanism, so that the data model is movable along the virtual conveying line during the simulation process; and a control module configured to: when it is determined that the actual distance is the same as the target distance, control the data model to stop moving.

According to a fifth aspect, the present application provides an electronic device, including: at least one processor; and a memory communicatively connected to the at least one processor, where the memory stores instructions executable by the at least one processor, and the instructions, when executed by the at least one processor, cause the at least one processor to perform a virtual simulation method for a conveying mechanism according to the first aspect.

According to a sixth aspect, the present application provides a PLC, including: at least one processor; and a memory communicatively connected to the at least one processor, where the memory stores instructions executable by the at least one processor, and the instructions, when executed by the at least one processor, cause the at least one processor to perform a virtual simulation method for a conveying mechanism according to the second aspect.

According to a seventh aspect, the present application provides a computer-readable storage medium having stored thereon a computer program that, when executed by a processor, implements a virtual simulation method for a conveying mechanism according to the first aspect or the second aspect.

The above description is merely a summary of the technical solutions of the present application. To make the technical means of the present application more clearly understood and implemented according to the contents of the description, and to make the above and other objectives, features, and advantages of the present application more obvious and comprehensible, the embodiments of the present application are described in detail below.

Brief Description of the Drawings

Various other advantages and benefits will become apparent to those of ordinary skill in the art upon reading the following detailed description of preferred embodiments. The drawings are merely for the purpose of illustrating the preferred embodiments, and are not to be considered a limitation to the present application. Moreover, like components are denoted by like reference numerals throughout the drawings. In the drawings:

> FIG. 1 is a flowchart of a virtual simulation method for a conveying mechanism according to an embodiment of the present application;
> FIG. 2 is a schematic diagram of a virtual conveying line created according to a data model of a conveying mechanism according to an embodiment of the present application;
> FIG. 3 is a flowchart of another virtual simulation method for a conveying mechanism according to an embodiment of the present application;
> FIG. 4 is a flowchart of a virtual simulation method for a conveying mechanism applied to a PLC according to an embodiment of the present application;
> FIG. 5 is a schematic diagram of a virtual simulation apparatus for a conveying mechanism according to an embodiment of the present application;
> FIG. 6 is a schematic diagram of another virtual simulation apparatus for a conveying mechanism according to an embodiment of the present application;
> FIG. 7 is a schematic diagram of a structure of an electronic device according to an embodiment of the present application; and
> FIG. 8 is a schematic diagram of a structure of a PLC according to an embodiment of the present application.

Detailed Description of Embodiments

The embodiments of the technical solutions of the present application are described in detail below with reference to the drawings. The following embodiments are merely used to illustrate the technical solutions of the present application more clearly. Therefore, they are merely used as examples, and shall not be used to limit the scope of protection of the present application.

Unless otherwise defined, all technical and scientific terms used herein have the same meanings as those commonly understood by those skilled in the art to which the present application pertains. The terms used herein are merely for the purpose of describing specific embodiments, and are not intended to limit the present application. The terms "including/comprising" and "having" and any variations thereof in the specification and claims and the above brief description of the drawings are intended to cover a non-exclusive inclusion.

In the description of the embodiments of the present application, the technical terms "first", "second", etc. are merely used to distinguish different objects, and should not be understood as indicating or implying relative importance or the number, specific order, or priority relationship of the indicated technical features. In the description of the embodiments of the present application, "a plurality of" means at least two, unless otherwise expressly and specifically defined.

The "embodiment" mentioned herein means that a particular feature, structure, or characteristic described with reference to the embodiment can be included in at least one embodiment of the present application. This term appearing in various parts of the specification not necessarily refers to the same embodiment, nor an independent or alternative embodiment that is mutually exclusive to other embodiments. Those skilled in the art understand explicitly or implicitly that the embodiment described herein may be combined with another embodiment.

In the description of the embodiments of the present application, the term "and/or" is merely used to describe an association relationship between associated objects, indicating that there may be three relationships. For example, A and/or B may indicate that: only A exists, both A and B exist, and only B exists. In addition, the character "/" herein generally indicates an "or" relationship between the associated objects.

In the description of the embodiments of the present application, the term "a plurality of" means at least two (including two). Similarly, "a plurality of groups" means at least two groups (including two groups); and "a plurality of pieces" means at least two pieces (including two pieces).

In the description of the embodiments of the present application, the orientation or position relationships indicated by the technical terms "central", "longitudinal", "transverse", "length", "width", "thickness", "upper", "lower", "front"; "rear", "left", "right", "vertical", "horizontal", "top", "bottom", "inner", "outer", "clockwise", "counterclockwise", "axial", "radial", "circumferential", etc. are based on the orientation or position relationships shown in the accompanying drawings and are merely intended to facilitate and simplify the description of the embodiments of the present application, rather than indicating or implying that the apparatus or element considered must have a particular orientation or be constructed and operated in a particular orientation, and therefore not to be construed as limiting the embodiments of the present application.

In the description of the embodiments of the present application, unless otherwise expressly specified and defined, the technical terms "mount", "engage", "connect", "fasten", etc. should be interpreted in a broad sense, which, for example, may mean a fixed connection, a detachable connection or an integral connection; may mean a mechanical connection or an electrical connection; and may mean a direct connection, an indirect connection by means of an intermediary, internal communication between two elements, or an interaction between two elements. Those of ordinary skill in the art can understand the specific meanings of the above terms in the embodiments of the present application based on specific situations.

In view of of the development of the market, traction batteries are used more and more widely. Traction batteries are not only used in energy storage power systems such as hydroelectric power plants, thermal power plants, wind power plants and solar power plants, but also widely used in electric transportation means such as electric bicycles, electric motorcycles, and electric vehicles, as well as in many fields such as military equipment and aerospace. As the application fields of the traction batteries continuously expand, the market demand for traction batteries is also expanding. As a component of a traction battery, a cell is also widely demanded by the market. In the field of cells, virtual simulation is of great significance for providing guidelines for the efficiency and safety of cell production.

The inventors have noticed that in a cell module production workshop, steps of a virtual simulation operation for a belt looped line are as follows: 1. In Tecnomatix, a Conveyor-Control Point is used to establish a stop point (Stop Point) for a stop position of each pallet to stop the pallet. The stop position of each pallet needs to be calculated in sequence according to process files, and added one by one based on speed attributes. 2. A real-time position is obtained through interaction with a PLC by establishing a virtual axis.

There are many steps in the above virtual simulation operation, and each major operation further requires many small operations to be completed sequentially. The operation is cumbersome and error-prone, which is specifically reflected in the following aspects:

1. A Stop Point is manually selected, resulting in unavoidable absolute errors between a pallet stop position and an actual position during the simulation process, which affects the accuracy of process validation and cycle time calculation.

2. The belt looped line is servo-driven, and needs to interact with the PLC for a real-time position of the belt. The PLC determines based on this feedback whether the belt needs to stop running. The premise of a Stop Point control method is that the movement of the belt looped line never stops by default. In this method, it is difficult to interact with the PLC for the real-time position, and the interaction with the PLC can be performed only by establishing a virtual axis.

Due to the existence of a large number of belt looped lines in the field of production and manufacturing, the need to establish the Stop Point and the virtual axis in sequence during virtual simulation results in a huge workload for a virtual simulation engineer. If a position of the stop point is defined incorrectly, and large deviations occur in validation results and cause a project delay, the loss will be incalculable. Therefore, the virtual simulation engineer needs to perform cross-validation, which further increases the workload.

In order to reduce the simulation errors and simplify the simulation operation, the applicant found through research that an actual distance for which a conveying mechanism (such as a belt looped line) moves each time during a simulation process can be determined by a created target logic block, so that when it is determined that the actual distance is the same as a target distance for which the conveying mechanism should move each time, the PLC controls the conveying mechanism to stop moving.

A virtual simulation method for a conveying mechanism disclosed in the embodiments of the present application is applied to an electronic device. Simulation software may be installed on the electronic device. The simulation software may be Tecnomatix. For example, the electronic device may be a computer running Tecnomatix. Virtual simulation for the conveying mechanism may be performed through the simulation software. The conveying mechanism is a mechanism for conveying a target object. The target object may be a pallet, in which a battery, a cell, etc. may be placed. The conveying mechanism may be the above-mentioned belt looped line in the cell module production workshop. However, the specific target object conveyed by the conveying mechanism and the specific form of the conveying mechanism are not specifically limited in the embodiments.

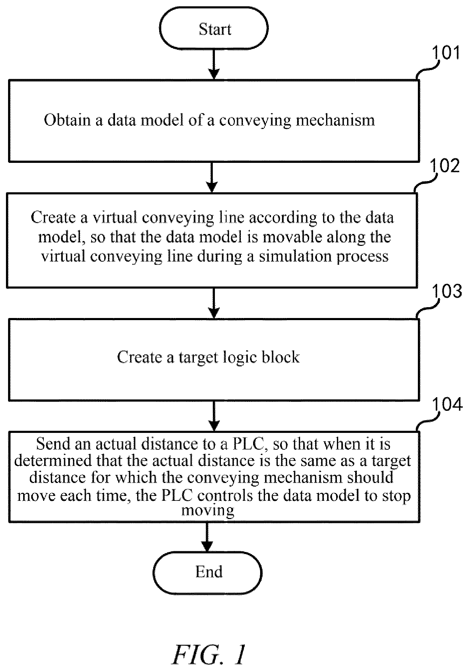

According to the invention, a virtual simulation method for a conveying mechanism is applied to an electronic device on which simulation software is installed. Referring to FIG. 1, a flowchart of the virtual simulation method includes the following steps:

Step 101: Obtain a data model of the conveying mechanism.

Step 102: Create a virtual conveying line according to the data model, so that the data model is movable along the virtual conveying line during a simulation process.

Step 103: creating a target logic block, where the target logic block is used to determine an actual distance for which the data model of the conveying mechanism moves each time during the simulation process.

Step 104: Send the actual distance to a PLC, so that when it is determined that the actual distance is the same as a target distance for which the conveying mechanism should move each time, the PLC controls the conveying mechanism to stop moving.

In step 101, the electronic device may obtain the data model of the conveying mechanism from a resource list

EP 4 290 321 B1

Object Tree of the simulation software. The data model of the conveying mechanism may be understood as a 3D model of the conveying mechanism. The data model may be a 3D model of a conveying mechanism in a simulated real production line, for example, may be a 3D model of a belt looped line on a cell production line. After the data model of the conveying mechanism is obtained, the 3D model of the conveying mechanism may be displayed on a simulation interface of the simulation software. The 3D model of the conveying mechanism may be displayed at a preset position on the simulation interface, and the position of the 3D model of the conveying mechanism on the simulation interface may be moved according to actual needs. In a specific implementation, the obtained data model of the conveying mechanism may also be understood as creating the data model of the conveying mechanism in the simulation interface, or creating a virtual conveying mechanism in the simulation interface.

In step 102, the virtual conveying line may be a line segment Polyline on the simulation interface. In a specific implementation, the position of the data model of the conveying mechanism in the simulation interface may be first determined, and a line segment may be drawn at the determined position as a virtual conveying line, so that the data model of the conveying mechanism can move along the virtual conveying line during the simulation process. In other words, the data model of the conveying mechanism obtained in step 101 is still, and the virtual conveying line is created so that the data model can move along the virtual conveying line.

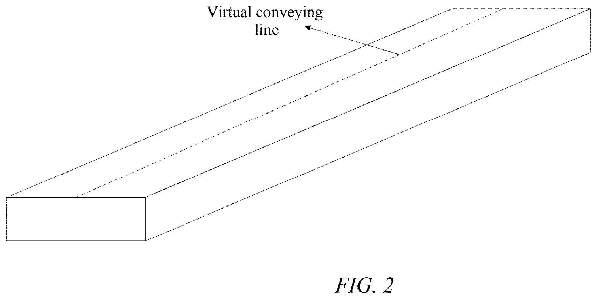

For example, referring to FIG. 2, assuming that the data model of the conveying mechanism is a cube in FIG. 2, the virtual conveying line created according to the data model of the conveying mechanism may be a line segment drawn at a surface position of the cube, which may be, for example, a dashed line in FIG. 2. However, the position of the virtual conveying line on the data model is not specifically limited in this embodiment.

In step 103, the target logic block may be created in the simulation interface and associated with the data model, so that the data model has a logical operation function of the target logic block. For example, operational logic for determining the actual distance for which the data model moves each time during the simulation process may be written, and the operational logic may be packaged into a target logic block, thereby completing the creation of the target logic block. The target logic block may also be understood as being configured to determine the actual distance for which the virtual conveying mechanism moves each time during the simulation process.

In step 104, during the process of virtual simulation for the conveying mechanism through the simulation software, the actual distance for which the data model moves each time and that is determined in real time by the target logic block may be sent to the PLC by the electronic device running the simulation software, so that when it is determined that the received actual distance is the same as the target distance for which the conveying mechanism should move each time, the PLC controls the data model to stop moving, that is, controls the virtual conveying mechanism to stop moving.

In some embodiments, an implementation of sending the actual distance to the PLC may be: associating the data model of the conveying mechanism with a preset pin of the PLC, so that the PLC can know in real time through the preset pin the actual distance for which the data model moves each time.

In a specific implementation, during the process of conveying a target object, the conveying mechanism may stop moving multiple times, and resume moving after a preset time interval for each stop. Throughout the process, the conveying mechanism may correspond to a cumulative movement distance. That is, after each resumption of the movement, a movement distance is added to the previous movement distances. The resumption of the movement by the conveying mechanism after each stop is considered as one movement of the conveying mechanism. Therefore, the conveying mechanism may also correspond to an actual distance of each movement. That is, an actual distance of a current movement of the conveying mechanism is recalculated from 0 each time the movement is resumed. Accordingly, in this embodiment, the virtual simulation for the conveying mechanism is performed, that is, the actual distance for which the data model of the conveying mechanism moves each time during the simulation process needs to be determined. Since the data model of the conveying mechanism may also be understood as a virtual conveying mechanism, determining the actual distance for which the data model of the conveying mechanism moves each time during the simulation process may also be understood as determining an actual distance for which the virtual conveying mechanism moves each time during the simulation process. The actual distance for which the virtual conveying mechanism moves each time during the simulation process corresponds to an actual distance for which the real conveying mechanism moves each time during the production process, and their determination methods are similar.

For example, the target object is a pallet, in which a cell may be placed. During the process of conveying the pallet, the conveying mechanism may stop moving each time it reaches a specified position, so that the cell can be taken out of the pallet, or a new cell is placed into the pallet. A distance between different positions of the same pallet or a distance actually traveled by the conveying mechanism during two adjacent stops of the movement of the conveying mechanism may be understood as the actual distance of the current movement of the conveying mechanism. For example, when the conveying mechanism stops for the $i^{th}$ time, pallet a is at point A, and when the conveying mechanism stops for the $(i+1)^{th}$ time, pallet a is at point B. In this case, the actual distance of the current movement, namely, the $i^{th}$ movement, of the conveying mechanism may be a distance between point A and point B.

The target distance for which the conveying mechanism should move each time may be a distance for which the conveying mechanism is expected to move each time and that is set according to actual needs, that is, how far the conveying mechanism is expected to move before stopping.

In this embodiment, the actual distance for which the data model of the conveying mechanism moves each time during the simulation process is determined by the created target logic block, so that when it is determined that the actual distance is the same as the target distance for which the conveying mechanism should move each time, the PLC controls the data model to stop moving. In this embodiment, during the virtual simulation for the conveying mechanism, there is no need to establish a Stop Point, which helps to avoid simulation errors caused by establishing the Stop Point. In addition, the virtual axis established for interacting with the PLC for the real-time position is also omitted, thereby simplifying the simulation operation.

According to some embodiments of the present application, optionally, the target logic block is used to determine the actual distance for which the data model moves each time during the simulation process, based on the target distance for which the conveying mechanism should move each time and a cumulative movement distance of the data model during the simulation process.

The target distance for which the conveying mechanism should move each time may be understood as a distance for which the conveying mechanism is expected to move each time and that is set according to actual needs, that is, how far the conveying mechanism is expected to move before stopping. The target distance for which the conveying mechanism should move each time may be sent by the PLC to the electronic device running the simulation software.

During the process of conveying a target object, the data model of the conveying mechanism, namely, the virtual conveying mechanism may stop moving multiple times, and resume moving after a preset time interval for each stop. Throughout the process, the virtual conveying mechanism may correspond to a cumulative movement distance. That is, after each resumption of the movement, a movement distance is added to the previous movement distances. Therefore, the cumulative movement distance of the data model may be understood as a cumulative movement distance of the data model of the conveying mechanism since the start of the simulation. That is, each time the virtual conveying mechanism resumes its movement, a movement distance obtained is added to the previous movement distances, and the accumulated movement distance is the cumulative movement distance of the data model during the simulation process. In other words, the accumulative movement distance of the data model during the simulation process is the sum of distances for which the virtual conveying mechanism actually moves multiple times since the start of the simulation. The actual distance for which the data model moves each time during the simulation process may be obtained based on the sum of the distances for which the virtual conveying mechanism actually moves multiple times since the start of the simulation and the target distance for which the conveying mechanism should move each time.

In this embodiment, the combination of the target distance for which the conveying mechanism should move each time and the cumulative movement distance of the data model of the conveying mechanism helps to accurately obtain the actual distance for which the data model of the conveying mechanism moves each time during the simulation process.

According to the invention, the target logic block is used to calculate the actual distance for which the data model moves each time during the simulation process, according to the following formula:

$$D = Con\_Pos - (RoundDown(Con\_Pos \div (Target\_Pos + 1)) * Target\_Pos)$$

where D is the actual distance, Con_Pos is the cumulative movement distance of the data model, and Target_Pos is the target distance.

The above formula for calculating the actual distance for which the data model moves each time during the simulation process may be stored in the target logic block. In the above formula, for the same conveying mechanism, the target distance may be constant and can be determined in advance. Therefore, a variable in the above formula is Con_Pos. During the simulation process, the simulation software may determine Con_Pos in real time, and input Con_Pos to the formula stored in the target logic block, so that D is calculated through this formula. D may also be understood as the actual distance of the current movement of the data model. RoundDown is a function that rounds a number down (the direction in which the absolute value decreases) to a specified number of decimal places.

For different conveying mechanisms in a specific implementation, the target distance Target_Pos in the above formula may be different.

Assuming that the target distance is 1,000, the actual distance for which the data model moves each time is within the range of 0 to 1,000, and the cumulative movement distance continuously increases starting from 0. If the cumulative movement distance is 5,500, Con_Pos = 5,500 and Target_Pos = 1,000 are substituted into the above formula to obtain: D = 5,500 - (RoundDown(5,500 ÷ (1,000 + 1)) * 1,000) = 5,500 - 5 * 1,000 = 500. In other words, when the cumulative movement distance of the data model of the conveying mechanism is 5,500, the actual distance of the current movement of the data model of the conveying mechanism is 500.

In this embodiment, presetting the formula for calculating the actual distance in the target logic block helps to quickly calculate the actual distance for which the data model of the conveying mechanism moves each time during the simulation process, so as to interact with the PLC in time, thereby improving the accuracy of the PLC controlling the data model of the conveying mechanism to stop moving.

According to some embodiments of the present application, optionally, the cumulative movement distance of the data model is measured based on a distance sensor provided on the data model side of the conveying mechanism.

The distance sensor provided on the data model side of the conveying mechanism may be a virtual distance sensor created on the simulation interface. The cumulative movement distance of the data model of the conveying mechanism may be measured by the virtual distance sensor. **In** other words, the cumulative movement distance of the virtual conveying mechanism is measured by the virtual distance sensor. Since the distance sensor itself, after being started, can measure an accumulative value of movement distances of a measurement object within a period of time, the distance sensor used in this embodiment can directly and conveniently measure the cumulative movement distance of the data model of the conveying mechanism.

**In** this embodiment, a method for determining the cumulative movement distance is provided. The distance sensor provided on the data model side of the conveying mechanism facilitates the direct and accurate measurement of the cumulative movement distance, thereby improving the accuracy of the actual distance for which the data model of the conveying mechanism moves each time and that is determined based on the cumulative movement distance.

According to some embodiments of the present application, optionally, the target distance is determined based on process information of the conveying mechanism.

Different conveying mechanisms correspond to different process information. The process information of the conveying mechanism may include the target distance for which the conveying mechanism should move each time, a speed of a servo motor, etc. Therefore, in this embodiment, the target distance for which the conveying mechanism should move each time may be obtained from the process information of the conveying mechanism.

**In** this embodiment, different conveying mechanisms may correspond to different target distances due to their different process information. Therefore, it is advantageous to obtain a target distance adapted to the conveying mechanism based on the process information of the conveying mechanism.

According to some embodiments of the present application, optionally, step 103 of creating the target logic block includes: obtaining a pre-packaged standard logic block for determining the actual distance for which the data model of the conveying mechanism moves each time during the simulation process; and copying operational logic in the standard logic block to the data model to create the target logic block.

**In** this embodiment, a number of standard logic blocks for implementing different functions may be pre-packaged and stored in the simulation software, so that they can be called at any time when needed. Specifically, in this embodiment, the standard logic block for determining the actual distance for which the data model of the conveying mechanism moves each time during the simulation process may be obtained from the number of pre-packaged standard logic blocks for implementing different functions, and then the operational logic in the standard logic block is copied to the data model to create the target logic block. The copying of the operational logic may be multiple batch copying, or one-time all copying. The operational logic may include the formula for calculating the actual distance mentioned in the above embodiment.

In this embodiment, the target logic block is created based on the pre-packaged standard logic block without starting from scratch, which helps to improve the efficiency and accuracy of creating the target logic block.

According to some embodiments of the present application, optionally, copying the operational logic in the standard logic block to the data model to create the target logic block includes: copying, by using a Copy LB Logic instruction, operational logic in the standard logic block to the data model to create the target logic block.

The Copy LB Logic instruction may be a logic copy instruction for a logic block in the simulation software, and is used for copying operational logic in a specified logic block to a specified area. In this embodiment, the specified logic block is the standard logic block for determining the actual distance for which the data model of the conveying mechanism moves each time during the simulation process, and the specified area is the data model of the conveying mechanism.

In this embodiment, the Copy LB Logic instruction facilitates the accurate and quick completion of the copying of the operational logic, thereby quickly and accurately completing the creation of the target logic block.

According to some embodiments of the present application, optionally, the virtual simulation method for a conveying mechanism further includes: setting an offset between the virtual conveying line and the pallet according to an allowable error range, so that when a distance between the virtual conveying line and the pallet is within the offset, the pallet moves along with the data model of the conveying mechanism.

The allowable error range may be set according to actual needs. For example, if the error tolerance is extremely low, or even no error can be tolerated, the error range may be set to 0. If there is a certain tolerance for the error, the error range may be set according to the magnitude of the tolerance.

The offset between the virtual conveying line and the pallet that is set according to the allowable error range may be within the allowable error range. For example, if the allowable error range is from -5 to +5, the offset may be selected from -5 to +5. The above-mentioned pallet may be a pallet created in the simulation interface, and therefore may also be understood as a virtual pallet, or as a data model of a real pallet. **In** the simulation interface, the virtual pallet is on the virtual conveying mechanism, and the virtual conveying line is drawn on a conveying surface of the virtual conveying mechanism. When the distance between the virtual conveying line and the pallet is below the offset, the pallet is considered to move along with the virtual conveying mechanism. When the distance between the virtual conveying line and the pallet is not below the offset, the pallet is not considered to move along with the virtual conveying mechanism.

An allowable error may also be understood as: the shortest distance between the data model of the pallet and the virtual conveying line may not be "0". If the shortest distance between the data model of the pallet and the virtual conveying line is 10, the offset may be set to be greater than or equal to 10, so that even if the position of the virtual conveying line deviates, it does not affect the movement of the pallet. **In** a specific implementation, the offset may also be set to 0 to achieve zero error tolerance.

**In** this embodiment, the setting of the allowable error range allows a certain distance error between two data models during the creation of the data models of the conveying mechanism and the pallet in the simulation interface, lowering the strictness of requirements for the distance between the conveying mechanism and the pallet during the creation of the conveying mechanism and the pallet in the simulation interface.

According to some embodiments of the present application, optionally, step 102 of creating the virtual conveying line according to the data model includes: determining an actual position of the data model of the conveying mechanism; and creating the virtual conveying line on the data model of the conveying mechanism based on the actual position, and defining an attribute of the virtual conveying line to be a conveyor type.

**In** this embodiment, the actual position of the data model of the conveying mechanism may be an actual position of the data model of the conveying mechanism in the simulation interface, so that a creation position of the virtual conveying line can be determined based on the actual position. For example, the creation position of the virtual conveying line may be the conveying surface of the data model of the conveying mechanism, and a line segment is drawn on the conveying surface as the virtual conveying line. The conveying surface of the data model of the conveying mechanism may be one of the surfaces of the data model that are in direct contact with the target object to be conveyed. After the line segment as the virtual conveying line has been drawn on the conveying surface, the attribute of the virtual conveying line may be defined to be the conveyor type, that is, the Conveyor type, thereby successfully completing the creation of the virtual conveying line, so that the data model of the conveying mechanism is movable along the successfully created virtual conveying line during the simulation process.

**In** this embodiment, a method for creating the virtual conveying line is provided. Combining with the actual position of the data model of the conveying mechanism helps to accurately determine the creation position of the virtual conveying line, and the definition of the attribute of the conveyor type helps to accurately create the virtual conveying line.

According to some embodiments of the present application, optionally, after step 104 of creating the target logic block, the method further includes: determining whether the target logic block is created successfully; and when it is determined that the target logic block is not created successfully, redefining the attribute of the virtual conveying line.

Whether the target logic block is created successfully may be determined by verifying whether the target logic block can accurately calculate the actual distance for which the data model of the conveying mechanism moves each time during the simulation process. For example, if the verification result is yes, it is determined that the target logic block is created successfully; and if the verification result is no, it is determined that the target logic block is not successfully created.

**In** this embodiment, a main reason for which the target logic block is not successfully created may be that there is a problem in the attribute definition of the virtual conveying line. For example, the problem may be specifically that the attribute of the virtual conveying line is not accurately defined to be the conveyor type. Therefore, in this embodiment, when it is determined that the target logic block is not created successfully, the attribute of the virtual conveying line is redefined, that is, the attribute of the virtual conveying line is redefined to be the conveyor type, so as to increase a possibility of the target logic block being successfully created.

**In** this embodiment, since the main reason for which the target logic block is not successfully created may be that the attribute is incorrectly defined or is not defined, when it is determined that the target logic block is not successfully created, the attribute of the virtual conveying line is redefined, which facilitates the successful creation of the target logic block.

According to some embodiments of the present application, optionally, the virtual simulation method for a conveying mechanism further includes: determining a speed of a servo motor based on the process information of the conveying mechanism; and during the simulation process, setting a movement speed of the data model of the conveying mechanism to be the speed of the servo motor.

The speed of the servo motor may be a speed value of a motor driving the conveying mechanism in a real scene. Different conveying mechanisms correspond to different process information. The process information of the conveying mechanism may include the target distance for which the conveying mechanism should move each time, a speed of a servo motor, etc. Therefore, in this embodiment, the speed of the servo motor may be obtained from the process information of the conveying mechanism, so that during the simulation process, the movement speed of the data model of the conveying mechanism is set to the speed of the servo motor to simulate the movement speed of the conveying

**EP 4 290 321 B1**

mechanism in a real scene.

**In** this embodiment, the speed of the servo motor is determined according to the process information of the conveying mechanism, and the movement speed of the data model of the conveying mechanism is set to the speed of the servo motor, which helps to simulate a real movement speed of the conveying mechanism during the simulation process, thereby achieving a desired simulation effect.

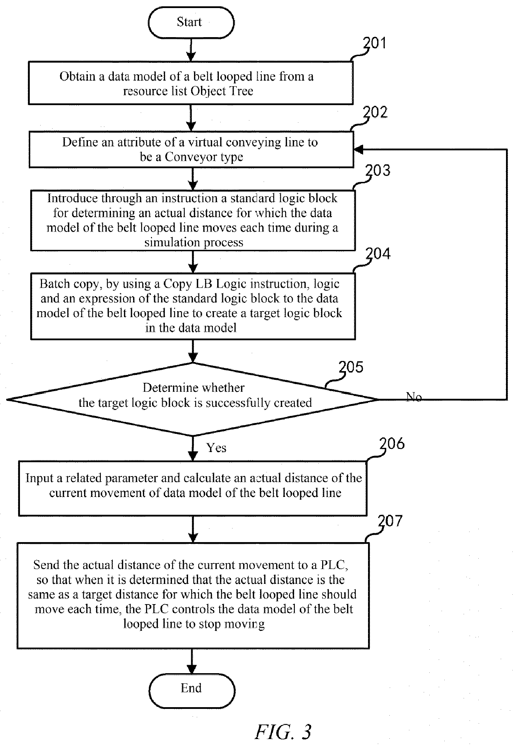

According to some embodiments of the present application, the conveying mechanism is a belt looped line, and the target object conveyed by the belt looped line is a pallet. Referring to FIG. 3, a flowchart of a virtual simulation method for a belt looped line may include the following steps:

Step 201: Obtain a data model of a belt looped line from a resource list Object Tree.

Step 202: Define an attribute of a virtual conveying line (Polyline) to be a Conveyor type. The virtual conveying line is created according to an actual position of the data model of the belt looped line in a simulation interface. After the attribute definition, an offset between the virtual conveying line and a pallet nay be further set.

Step 203: Introduce through an instruction a standard logic block for determining an actual distance for which the data model of the belt looped line moves each time during a simulation process.

Step 204: Batch copy, by using a Copy LB Logic instruction, logic, and an expression of the standard logic block to the data model of the belt looped line to create a target logic block in the data model, so that the data model has a logical operation function in the standard logic block. The expression in the standard logic block may be: D = Con_Pos - (RoundDown(Con _Pos ÷ (Target_Pos + 1)) * Target_Pos).

Step 205: Determine whether the target logic block is successfully created. If the determination result is yes, proceed to step 206; otherwise, proceed to step 202 to redefine the attribute of the virtual conveying line.

Step 206: Input a related parameter and calculate an actual distance of the current movement of data model of the belt looped line. The related parameter may be the cumulative movement distance Con_Pos in the above expression. It can be understood that during the simulation process, the cumulative movement distance Con_Pos is changing, and therefore the current cumulative movement distance Con_Pos of the data model of the belt looped line may be obtained in real time, and the cumulative movement distance Con_Pos may be input to the above expression to obtain the actual distance D of the current movement of the data model of the belt looped line.

Step 207: Send the actual distance of the current movement to a PLC, so that when it is determined that the actual distance is the same as a target distance for which the belt looped line should move each time, the PLC controls the data model of the belt looped line to stop moving.

In this embodiment, the function of virtual simulation for the belt looped line is implemented by obtaining Con_Pos and Target_Pos, and the problem of the error between the stop position and the actual position of the pallet in the virtual simulation is solved, which avoids a project delay caused by simulation errors, and reduces a debugging risk. The expression in the target logic block saves the operation step of establishing a virtual axis in the virtual simulation for the belt looped line, which greatly reduces the workload of a simulation engineer. The belt looped line is widely used in a production workshop, which makes the virtual simulation work heavy. **In** this embodiment, the target logic block can be automatically created. The entire customization process is highly automated, can be processed in batches, and there is basically no flaw or error in standardized execution, which greatly reduces the workload of the engineer.

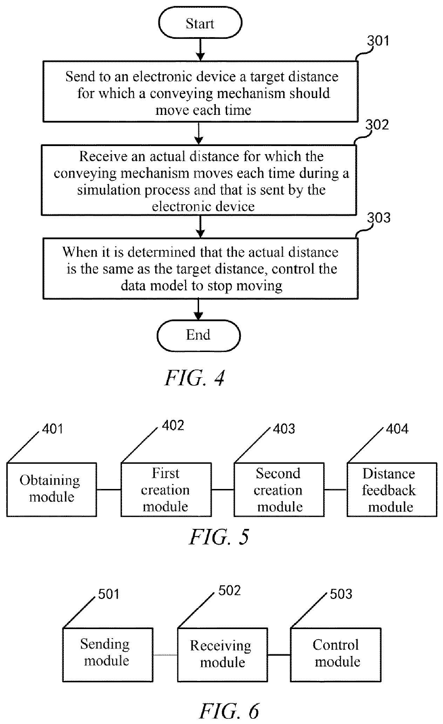

According to some embodiments of the present application, a virtual simulation method for a conveying mechanism is applied to a PLC. Referring to FIG. 4, a flowchart of the virtual simulation method includes the following steps:

Step 301: Send to an electronic device a target distance for which the conveying mechanism should move each time.

Step 302: Receive an actual distance for which the conveying mechanism moves each time during a simulation process and that is sent by the electronic device, where the actual distance is determined by a target logic block created by the electronic device, and the electronic device creates a virtual conveying line according to an obtained data model of the conveying mechanism, so that the data model is movable along the virtual conveying line during the simulation process.

Step 303: When it is determined that the actual distance is the same as the target distance, control the data model to stop moving.

It will be apparent that this embodiment can be implemented in cooperation with the foregoing embodiment of the virtual simulation method for a conveying mechanism applied to the electronic device. The relevant technical details mentioned above in the embodiment of the virtual simulation method for a conveying mechanism applied to the electronic device are still effective in this embodiment, and will not be repeated here in order to reduce repetition. Correspondingly, the relevant technical details mentioned in this embodiment may also be applied in the foregoing embodiment of the virtual simulation method for a conveying mechanism applied to the electronic device.

According to some embodiments of the present application, a virtual simulation apparatus for a conveying mechanism is provided. As shown in FIG. 5, the apparatus includes: an obtaining module 401 configured to obtain a data model of the conveying mechanism; a first creation module 402 configured to create a virtual conveying line according to the data model, so that the data model is movable along the virtual conveying line during a simulation process; a second creation module 403 configured to create a target logic block, where the target logic block is used to determine an actual distance for which the data model moves each time during the simulation process; and a distance feedback module 404 configured to send the actual distance to a PLC, so that when it is determined that the actual distance is the same as a target distance for which the conveying mechanism should move each time, the PLC controls the data model to stop moving.

It will be apparent that this embodiment is a virtual simulation apparatus embodiment corresponding to the foregoing virtual simulation method for a conveying mechanism applied to the electronic device, and that this embodiment can be implemented in cooperation with the foregoing embodiment of the virtual simulation method for a conveying mechanism applied to the electronic device. The relevant technical details mentioned above in the embodiment of the virtual simulation method for a conveying mechanism applied to the electronic device are still effective in this embodiment, and will not be repeated here in order to reduce repetition. Correspondingly, the relevant technical details mentioned in this embodiment may also be applied in the foregoing embodiment of the virtual simulation method for a conveying mechanism applied to the electronic device.

According to some embodiments of the present application, a virtual simulation apparatus for a conveying mechanism is provided. As shown in FIG. 6, the apparatus includes: a sending module 501 configured to send to an electronic device a target distance for which the conveying mechanism should move each time; a receiving module 502 configured to receive an actual distance for which the data model moves each time during a simulation process and that is sent by the electronic device, where the actual distance is determined by a target logic block created by the electronic device, and the electronic device creates a virtual conveying line according to an obtained data model of the conveying mechanism, so that the data model is movable along the virtual conveying line during the simulation process; and a control module 503 configured to: when it is determined that the actual distance is the same as the target distance, control the data model to stop moving.

It will be apparent that this embodiment is a virtual simulation apparatus embodiment corresponding to the foregoing virtual simulation method for a conveying mechanism applied to the PLC, and that this embodiment can be implemented in cooperation with the foregoing embodiment of the virtual simulation method for a conveying mechanism applied to the PLC. The relevant technical details mentioned above in the embodiment of the virtual simulation method for a conveying mechanism applied to the PLC are still effective in this embodiment, and will not be repeated here in order to reduce repetition. Correspondingly, the relevant technical details mentioned in this embodiment may also be applied in the foregoing embodiment of the virtual simulation method for a conveying mechanism applied to the PLC.

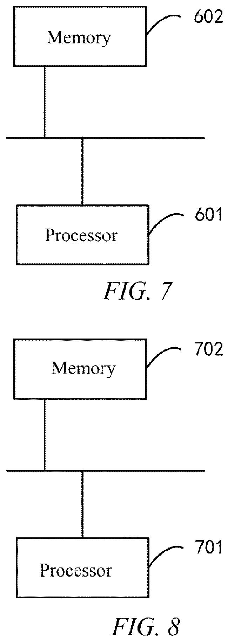

According to some embodiments of the present application, an electronic device is provided. As shown in FIG. 7, the electronic device includes:

at least one processor 601; and a memory 602 communicatively connected to the at least one processor 601, where the memory 602 stores instructions executable by the at least one processor 601, and the instructions, when executed by the at least one processor 601, cause the at least one processor 601 to perform the virtual simulation method for a conveying mechanism applied to the electronic device.

The memory 602 and the processor 601 are connected through a bus, the bus may include any number of interconnected buses and bridges, and the bus interconnects various circuits of one or more processors 601 and the memory 602. The bus may further connect together various other circuits, such as a peripheral device, a voltage regulator, and a power management circuit, which are well known in the art and therefore are not further described herein. The bus interface provides an interface between the bus and a transceiver. The transceiver may be one element or a plurality of elements, for example, a plurality of receivers and a plurality of transmitters, to provide a unit configured to communicate with various other apparatuses on a transmission medium. Data processed by the processor 601 is transmitted on a wireless medium by using an antenna. Further, the antenna further receives data and transmits the data to the processor 601.

The processor 601 is responsible for managing the bus and general processing, and may further provide various functions, including timing, peripheral interfacing, voltage regulation, power management, and another control function. The memory 602 may be configured to store data used when the processor 601 performs an operation.

According to some embodiments of the present application, a PLC is provided. As shown in FIG. 8, the PLC includes: at least one processor 701; and a memory 702 communicatively connected to the at least one processor 701, where the memory 702 stores instructions executable by the at least one processor 701, and the instructions, when executed by the at least one processor 701, cause the at least one processor 701 to perform the virtual simulation method for a conveying mechanism applied to the PLC.

The memory 702 and the processor 701 are connected through a bus, the bus may include any number of interconnected buses and bridges, and the bus interconnects various circuits of one or more processors 701 and the memory 702. The bus may further connect together various other circuits, such as a peripheral device, a voltage regulator, and a power management circuit, which are well known in the art and therefore are not further described herein. The bus interface provides an interface between the bus and a transceiver. The transceiver may be one element or a plurality of elements, for example, a plurality of receivers and a plurality of transmitters, to provide a unit configured to communicate with various other apparatuses on a transmission medium. Data processed by the processor 701 is transmitted on a wireless medium by using an antenna. Further, the antenna further receives data and transmits the data to the processor 701.

The processor 701 is responsible for managing the bus and general processing, and may further provide various functions, including timing, peripheral interfacing, voltage regulation, power management, and another control function. The memory 702 may be configured to store data used when the processor 701 performs an operation.

According to some embodiments of the present application, there is provided a computer-readable storage medium storing a computer program. The above method embodiments are implemented when the computer program is executed by the processor.

In other words, those skilled in the art can understand that all or some of the steps in the methods of the above embodiments may be completed by a program instructing relevant hardware, the program is stored in a storage medium, and includes several instructions used to cause a device (which may be a single-chip microcomputer, a chip, etc.) or a processor to perform all or some of the steps of the method in various embodiments of the present application. The storage medium includes: various mediums that can store program code, such as a USB flash drive, a mobile hard disk, a read-only memory (ROM), a random access memory (RAM), a magnetic disk, or an optical disk.

**Claims**

1. A virtual simulation method for a conveying mechanism, the method applied to an electronic device having a simulation software installed on the electronic device, comprising:

   obtaining (101) a data model of the conveying mechanism;
   creating (102) a virtual conveying line according to the data model on a simulation interface of the simulation software, wherein the data model is a 3D model of the conveying mechanism and is displayed on the simulation interface, and wherein the 3D model of the conveying mechanism is movable along the virtual conveying line during a simulation process;
   creating (103) a target logic block in the simulation interface, wherein the target logic block is used to determine an actual distance for which the data model moves each time during the simulation process, based on a target distance and a cumulative movement distance of the data model during the simulation process; and
   sending (104) the actual distance to a PLC, so that when it is determined that the actual distance is the same as a target distance for which the conveying mechanism should move, the PLC controls the data model to stop moving, wherein the target distance is a distance for which the conveying mechanism is expected to move each time, wherein the target logic block is used to calculate the actual distance according to the following formula:

$$D = Con\_Pos - (RoundDown(Con\_Pos \div (Target\_Pos + 1)) * Target\_Pos)$$

   wherein D is the actual distance, Con_Pos is the cumulative movement distance of the data model, and Target_Pos is the target distance, and
   wherein the cumulative movement distance is a cumulative movement distance of the data model of the conveying mechanism since a start of the simulation process.

2. The virtual simulation method for a conveying mechanism according to claim 1, wherein the cumulative movement distance is measured based on a distance sensor provided on the 3D model side of the conveying mechanism.

3. The virtual simulation method for a conveying mechanism according to any one of claims 1 to 2, wherein the target distance is determined based on process information of the conveying mechanism.

4. The virtual simulation method for a conveying mechanism according to any one of claims 1 to 3, wherein the creating (103) a target logic block comprises:

   obtaining a pre-packaged standard logic block for determining the actual distance for which the data model of the conveying mechanism moves each time during the simulation process; and
   copying operational logic in the standard logic block to the data model to create the target logic block.

5. The virtual simulation method for a conveying mechanism according to any one of claims 1 to 4, wherein after the creating (102) a virtual conveying line according to the data model, the method further comprises:
setting an offset between the virtual conveying line and a pallet according to an allowable error range, so that when a distance between the virtual conveying line and the pallet is within the offset, the pallet moves along with the 3D model of the conveying mechanism.

6. The virtual simulation method for a conveying mechanism according to any one of claims 1 to 5, wherein the creating (102) a virtual conveying line according to the data 3D comprises:

determining an actual position of the data model of the conveying mechanism; and
creating the virtual conveying line on the data model of the conveying mechanism based on the actual position, and defining an attribute of the virtual conveying line to be a conveyor type.

7. The virtual simulation method for a conveying mechanism according to any one of claims 1 to 6, wherein after the creating (102) a target logic block, the method further comprises:

determining whether the target logic block is created successfully; and
when it is determined that the target logic block is not created successfully, redefining the attribute of the virtual conveying line.
and/or, wherein the method further comprises:

determining a speed of a servo motor based on the process information of the conveying mechanism; and
during the simulation process, setting a movement speed of the data model of the conveying mechanism to be the speed of the servo motor.

8. An electronic device, comprising:

at least one processor (601, 701); and
a memory (602, 702) communicatively coupled to the at least one processor (601, 701), wherein
the memory (602, 702) stores instructions executable by the at least one processor (601, 701), and the instructions, when executed by the at least one processor (601, 701), cause the at least one processor (601, 701) to perform a virtual simulation method for a conveying mechanism according to any one of claims 1 to 7.

9. A computer-readable storage medium storing a computer program, wherein when the computer program is executed by a processor (601, 701), a virtual simulation method for a conveying mechanism according to any one of claims 1 to 7 is implemented.

**Patentansprüche**

1. Virtuelles Simulationsverfahren für einen Fördermechanismus, wobei das Verfahren auf eine elektronische Vorrichtung angewandt wird, bei der eine Simulationssoftware auf der elektronischen Vorrichtung installiert ist, und Folgendes umfasst:

Beschaffen (101) eines Datenmodells des Fördermechanismus;
Erzeugen (102) eines virtuellen Förderwegs gemäß dem Datenmodell auf einer Simulationsoberfläche der Simulationssoftware, wobei das Datenmodell ein 3D-Modell des Fördermechanismus ist und auf der Simulationsoberfläche dargestellt wird, und wobei das 3D-Modell des Fördermechanismus entlang des virtuellen Förderwegs während eines Simulationsprozesses bewegbar ist;
Erzeugen (103) eines Ziellogikblocks in der Simulationsoberfläche, wobei der Ziellogikblock zum Bestimmen einer tatsächlichen Distanz, um die das Datenmodell sich jedes Mal während des Simulationsprozesses bewegt, auf der Basis einer Zieldistanz und einer kumulativen Bewegungsdistanz des Datenmodells während des Simulationsprozesses verwendet wird; und
Senden (104) der tatsächlichen Distanz an einen PLC, sodass bei einer Bestimmung, dass die tatsächliche Distanz dieselbe wie eine Zieldistanz ist, um die sich der Fördermechanismus bewegen sollte, der PLC das Datenmodell steuert, die Bewegung zu stoppen,
wobei die Zieldistanz eine Distanz ist, um die sich der Fördermechanismus erwartungsgemäß jedes Mal bewegen soll,

wobei der Ziellogikblock zum Berechnen der tatsächlichen Distanz gemäß der folgenden Formel verwendet wird:

$$D = Con\_Pos - (RoundDown(Con\_Pos \div (Target\_Pos + 1)) * Target\_Pos)$$

wobei D die tatsächliche Distanz ist, Con_Pos die kumulative Bewegungsdistanz des Datenmodells ist und Target_Pos die Zieldistanz ist, und
wobei die kumulative Bewegungsdistanz eine kumulative Bewegungsdistanz des Datenmodells des Fördermechanismus von einem Start des Simulationsprozesses an ist.

2. Virtuelles Simulationsverfahren für einen Fördermechanismus nach Anspruch 1, wobei die kumulative Bewegungsdistanz auf der Basis eines auf der 3D-Modell-Seite des Fördermechanismus bereitgestellten Distanzsensors gemessen wird.

3. Virtuelles Simulationsverfahren für einen Fördermechanismus nach einem der Ansprüche 1 bis 2, wobei die Zieldistanz auf der Basis von Prozessinformation des Fördermechanismus bestimmt wird.

4. Virtuelles Simulationsverfahren für einen Fördermechanismus nach einem der Ansprüche 1 bis 3, wobei das Erzeugen (103) eines Ziellogikblocks Folgendes umfasst:

Beschaffen eines im Voraus paketierten Standardlogikblocks zum Bestimmen der tatsächlichen Distanz, um die sich das Datenmodell des Fördermechanismus jedes Mal während des Simulationsprozesses bewegt; und Kopieren von operativer Logik im Standardlogikblock zum Datenmodell, um den Ziellogikblock zu erzeugen.

5. Virtuelles Simulationsverfahren für einen Fördermechanismus nach einem der Ansprüche 1 bis 4, wobei nach dem Erzeugen (102) eines virtuellen Förderwegs gemäß dem Datenmodell das Verfahren ferner Folgendes umfasst: Einstellen eines Versatzes zwischen dem virtuellen Förderweg und einer Palette gemäß einem zulässigen Fehlerbereich, sodass die Palette sich entlang mit dem 3D-Modell des Fördermechanismus bewegt, wenn eine Distanz zwischen dem virtuellen Förderweg und der Palette innerhalb des Versatzes liegt.

6. Virtuelles Simulationsverfahren für einen Fördermechanismus nach einem der Ansprüche 1 bis 5, wobei das Erzeugen (102) eines virtuellen Förderwegs gemäß dem Datenmodell Folgendes umfasst:

Bestimmen einer tatsächlichen Position des Datenmodells des Fördermechanismus; und Erzeugen des virtuellen Förderwegs auf dem Datenmodell des Fördermechanismus auf der Basis der tatsächlichen Position und Definieren eines Attributs des virtuellen Förderwegs, von einem Typ von Fördersystem zu sein.

7. Virtuelles Simulationsverfahren für einen Fördermechanismus nach einem der Ansprüche 1 bis 6, wobei nach dem Erzeugen (102) eines Ziellogikblocks das Verfahren ferner Folgendes umfasst:

Bestimmen, ob der Ziellogikblock erfolgreich erzeugt worden ist; und wenn bestimmt worden ist, dass der Ziellogikblock nicht erfolgreich erzeugt worden ist, Neudefinieren des Attributs des virtuellen Förderwegs; und/oder wobei das Verfahren ferner Folgendes umfasst:

Bestimmen einer Geschwindigkeit eines Servomotors auf der Basis der Prozessinformation des Fördermechanismus; und während des Simulationsprozesses Einstellen einer Bewegungsgeschwindigkeit des Datenmodells des Fördermechanismus als die Geschwindigkeit des Servomotors.

8. Elektronische Vorrichtung, umfassend:

mindestens einen Prozessor (601, 701); und einen Arbeitsspeicher (602, 702) kommunikativ gekoppelt mit dem mindestens einen Prozessor (601, 701), wobei der Arbeitsspeicher (602, 702) Instruktionen speichert, die durch den mindestens einen Prozessor (601, 701) ausführbar sind, und die Instruktionen bei Ausführung durch den mindestens einen Prozessor (601, 701) den mindestens einen Prozessor (601, 701) veranlassen, ein virtuelles Simulationsverfahren für einen Fördermechanismus nach einem der Ansprüche 1 bis 7 durchzuführen.

9. Computerlesbares Speichermedium mit einem darauf gespeicherten Computerprogramm, wobei bei Ausführung des Computerprogramms durch einen Prozessor (601, 701) ein virtuelles Simulationsverfahren für einen Fördermechanismus nach einem der Ansprüche 1 bis 7 implementiert wird.

**Revendications**

1. Procédé de simulation virtuelle pour un mécanisme de transport, le procédé étant appliqué à un dispositif électronique sur lequel est installé un logiciel de simulation, le procédé comprenant les étapes consistant à :

   obtenir (101) un modèle de données du mécanisme de transport ;
   créer (102) une ligne de transport virtuelle selon le modèle de données sur une interface de simulation du logiciel de simulation, le modèle de données étant un modèle 3D du mécanisme de transport et étant affiché sur l'interface de simulation, et le modèle 3D du mécanisme de transport étant mobile le long de la ligne de transport virtuelle pendant un processus de simulation ;
   créer (103) un bloc logique cible sur l'interface de simulation, le bloc logique cible étant utilisé pour déterminer une distance réelle sur laquelle le modèle de données se déplace à chaque fois pendant le processus de simulation, sur la base d'une distance cible et d'une distance de déplacement cumulée du modèle de données pendant le processus de simulation ; et
   envoyer (104) la distance réelle à un PLC, de telle sorte que lorsqu'il est déterminé que la distance réelle est la même que la distance cible sur laquelle le mécanisme de transport doit se déplacer, le PLC commande le modèle de données pour qu'il arrête de se déplacer,
   la distance cible étant une distance sur laquelle le mécanisme de transport est censé se déplacer à chaque fois, le bloc logique cible étant utilisé pour calculer la distance réelle selon la formule suivante :

$$D = \text{Con\_Pos} - (\text{RoundDown}(\text{Con\_Pos} \div (\text{Target\_Pos} + 1)) * \text{Target\_Pos},$$

   D étant la distance réelle, Con_Pos étant la distance de déplacement cumulée du modèle de données, et Target_Pos étant la distance cible, et
   la distance de déplacement cumulée étant une distance de déplacement cumulée du modèle de données du mécanisme de transport depuis un début du processus de simulation.

2. Procédé de simulation virtuelle pour un mécanisme de transport selon la revendication 1, la distance de déplacement cumulée étant mesurée sur la base d'un capteur de distance situé du côté du modèle 3D du mécanisme de transport.

3. Procédé de simulation virtuelle pour un mécanisme de transport selon l'une quelconque des revendications 1 à 2, la distance cible étant déterminée sur la base d'informations de processus du mécanisme de transport.

4. Procédé de simulation virtuelle pour un mécanisme de transport selon l'une quelconque des revendications 1 à 3, la création (103) d'un bloc logique cible comprenant les étapes consistant à :

   obtenir un bloc logique standard préconditionné pour déterminer la distance réelle sur laquelle le modèle de données du mécanisme de transport se déplace à chaque fois pendant le processus de simulation ; et
   copier une logique opérationnelle dans le bloc logique standard vers le modèle de données pour créer le bloc logique cible.

5. Procédé de simulation virtuelle pour un mécanisme de transport selon l'une quelconque des revendications 1 à 4, le procédé comprenant en outre, après la création (102) d'une ligne de transport virtuelle selon le modèle de données, l'étape consistant à :
   régler un décalage entre la ligne de transport virtuelle et une palette selon une plage d'erreur admissible, de telle sorte que lorsqu'une distance entre la ligne de transport virtuelle et la palette se situe dans les limites du décalage, la palette se déplace conjointement avec le modèle 3D du mécanisme de transport.

6. Procédé de simulation virtuelle pour un mécanisme de transport selon l'une quelconque des revendications 1 à 5, la création (102) d'une ligne de transport virtuelle selon le modèle de données comprenant les étapes consistant à :

déterminer une position réelle du modèle de données du mécanisme de transport ; et
créer la ligne de transport virtuelle sur le modèle de données du mécanisme de transport sur la base de la position réelle, et définir un attribut de la ligne de transport virtuelle comme étant un type de transporteur.

7. Procédé de simulation virtuelle pour un mécanisme de transport selon l'une quelconque des revendications 1 à 6, le procédé comprenant en outre, après la création (102) d'un bloc logique cible, les étapes consistant à :

déterminer si le bloc logique cible est créé avec succès ; et
lorsqu'il est déterminé que le bloc logique cible n'est pas créé avec succès, redéfinir l'attribut de la ligne de transport virtuelle ;
et/ou le procédé comprenant en outre les étapes consistant à :

déterminer une vitesse d'un servomoteur sur la base des informations de processus du mécanisme de transport ; et
pendant le processus de simulation, régler une vitesse de déplacement du modèle de données du mécanisme de transport pour qu'elle soit la vitesse du servomoteur.

8. Dispositif électronique, comprenant :

au moins un processeur (601, 701) ; et
une mémoire (602, 702) couplée en communication à l'au moins un processeur (601, 701),
la mémoire (602, 702) stockant des instructions exécutables par l'au moins un processeur (601, 701), et les instructions, lorsqu'elles sont exécutées par l'au moins un processeur (601, 701), amenant l'au moins un processeur (601, 701) à réaliser un procédé de simulation virtuelle pour un mécanisme de transport selon l'une quelconque des revendications 1 à 7.

9. Support de stockage lisible par ordinateur, stockant un programme informatique qui, lorsqu'il est exécuté par un processeur (601, 701), provoque la mise en œuvre d'un procédé de simulation virtuelle pour un mécanisme de transport selon l'une quelconque des revendications 1 à 7.

```
        ┌─────────────┐
        │    Start    │
        └──────┬──────┘
               │                                      101
               ▼
┌──────────────────────────────────────────────┐
│                                                │
│   Obtain a data model of a conveying mechanism │
│                                                │
└──────────────────────┬─────────────────────────┘
                       │                          102
                       ▼
┌──────────────────────────────────────────────┐
│  Create a virtual conveying line according to  │
│  the data model, so that the data model is     │
│  movable along the virtual conveying line      │
│  during a simulation process                   │
└──────────────────────┬─────────────────────────┘
                       │                          103
                       ▼
┌──────────────────────────────────────────────┐
│                                                │
│           Create a target logic block          │
│                                                │
└──────────────────────┬─────────────────────────┘
                       │                          104
                       ▼
┌──────────────────────────────────────────────┐
│  Send an actual distance to a PLC, so that     │
│  when it is determined that the actual distance │
│  is the same as a target distance for which    │
│  the conveying mechanism should move each time, │
│  the PLC controls the data model to stop        │
│  moving                                         │
└──────────────────────┬─────────────────────────┘
                       │
                       ▼
                ┌─────────────┐
                │     End     │
                └─────────────┘
```

*FIG. 1*

Virtual conveying
line

*FIG. 2*

```
                          ┌──────────────┐
                          │    Start     │
                          └──────────────┘
                                 │
                                 ▼                           201
              ┌──────────────────────────────────────────┐
              │   Obtain a data model of a belt looped    │
              │   line from a resource list Object Tree   │
              └──────────────────────────────────────────┘
                                 │
                                 ▼                           202
              ┌──────────────────────────────────────────┐ ◄────────┐
              │   Define an attribute of a virtual        │          │
              │   conveying line to be a Conveyor type    │          │
              └──────────────────────────────────────────┘          │
                                 │                           203      │
                                 ▼                                    │
              ┌──────────────────────────────────────────┐          │
              │  Introduce through an instruction a       │          │
              │  standard logic block for determining     │          │
              │  an actual distance for which the data    │          │
              │  model of the belt looped line moves      │          │
              │  each time during a simulation process    │          │
              └──────────────────────────────────────────┘          │
                                 │                           204      │
                                 ▼                                    │
              ┌──────────────────────────────────────────┐          │
              │  Batch copy, by using a Copy LB Logic     │          │
              │  instruction, logic and an expression of  │          │
              │  the standard logic block to the data     │          │
              │  model of the belt looped line to create  │          │
              │  a target logic block in the data model   │          │
              └──────────────────────────────────────────┘          │
                                 │                                    │
                                 ▼            205                     │
                        ╱───────────────╲                            │
                      ╱   Determine whether ╲        No               │
                    ╱  the target logic block  ╲──────────────────────┘
                      ╲ is successfully created ╱
                        ╲───────────────╱
                                 │  Yes                      206
                                 ▼
              ┌──────────────────────────────────────────┐
              │  Input a related parameter and calculate  │
              │  an actual distance of the current        │
              │  movement of data model of the belt       │
              │  looped line                              │
              └──────────────────────────────────────────┘
                                 │                           207
                                 ▼
              ┌──────────────────────────────────────────┐
              │  Send the actual distance of the current  │
              │  movement to a PLC, so that when it is     │
              │  determined that the actual distance is    │
              │  the same as a target distance for which   │
              │  the belt looped line should move each     │
              │  time, the PLC controls the data model     │
              │  of the belt looped line to stop moving   │
              └──────────────────────────────────────────┘
                                 │
                                 ▼
                          ┌──────────────┐
                          │     End      │
                          └──────────────┘
```

*FIG. 3*

```
                        ┌─────────────┐
                        │    Start    │
                        └─────────────┘
                               │
                               ▼                          301
        ┌──────────────────────────────────────────────┐
        │ Send to an electronic device a target distance│
        │    for which a conveying mechanism should      │
        │               move each time                   │
        └──────────────────────────────────────────────┘
                               │                          302
                               ▼
        ┌──────────────────────────────────────────────┐
        │  Receive an actual distance for which the      │
        │ conveying mechanism moves each time during a   │
        │    simulation process and that is sent by the  │
        │                electronic device               │
        └──────────────────────────────────────────────┘
                               │                          303
                               ▼
        ┌──────────────────────────────────────────────┐
        │ When it is determined that the actual distance │
        │  is the same as the target distance, control the│
        │            data model to stop moving            │
        └──────────────────────────────────────────────┘
                               │
                               ▼
                        ┌─────────────┐
                        │     End     │
                        └─────────────┘
```

*FIG. 4*

```
      401             402             403             404
  ┌──────────┐    ┌──────────┐    ┌──────────┐    ┌──────────┐
  │          │    │  First   │    │  Second  │    │ Distance │
  │Obtaining │────│ creation │────│ creation │────│ feedback │
  │ module   │    │ module   │    │ module   │    │ module   │
  └──────────┘    └──────────┘    └──────────┘    └──────────┘
```

*FIG. 5*

```
      501             502             503
  ┌──────────┐    ┌──────────┐    ┌──────────┐
  │ Sending  │    │Receiving │    │ Control  │
  │ module   │────│ module   │────│ module   │
  └──────────┘    └──────────┘    └──────────┘
```

*FIG. 6*

*FIG. 7*

*FIG. 8*

**EP 4 290 321 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 110674562 A
- CN 111797521 A